# EUROPEAN PATENT APPLICATION

(11) **EP 2 023 030 A1**
(43) Date of publication of application: **11.02.2009**
(21) Application number: 07743380.3
(22) Date of filing: 15.05.2007
(51) Int. Cl.: F16L 39/00

(54) **PIPING JOINT**

(30) Priority: 25.05.2006 JP 2006145485
(71) Applicant: Calsonic Kansei Corporation, Saitama-shi Saitama 331-8501 (JP)
(72) Inventor: ICHIMURA, Nobuo, Saitama-shi, Saitama 331-8501 (JP); KUME, Takayuki, Saitama-shi, Saitama 331-8501 (JP); OOBA, Fuminori, Saitama-shi, Saitama 331-8501 (JP)
(74) Representative: Grünecker, Kinkeldey, Stockmair & Schwanhäusser Anwaltssozietät
(86) International application number: PCT/JP2007/059945
(87) International publication number: WO 2007/138852

(57) **Abstract**

The pipe connector (60) includes pipes each having a flange at an end portion thereof, and a base (65). The base is formed with insertion portions (65b, 65c) in which the pipes are inserted and seating surfaces (68, 69) formed at a rim of the insertion portion and contacting on the flanges so as to axially fix the pipes. The seating surfaces (68, 69) of the base are apart from each other by more than a thickness of the flanges (66, 67) in the axial position of the pipes (61, 62) such that the axial positions of the flanges are out of alignment with each other.

## Description

### TECHNICAL FIELD

The present invention relates to a pipe connector.

### BACKGROUND ART

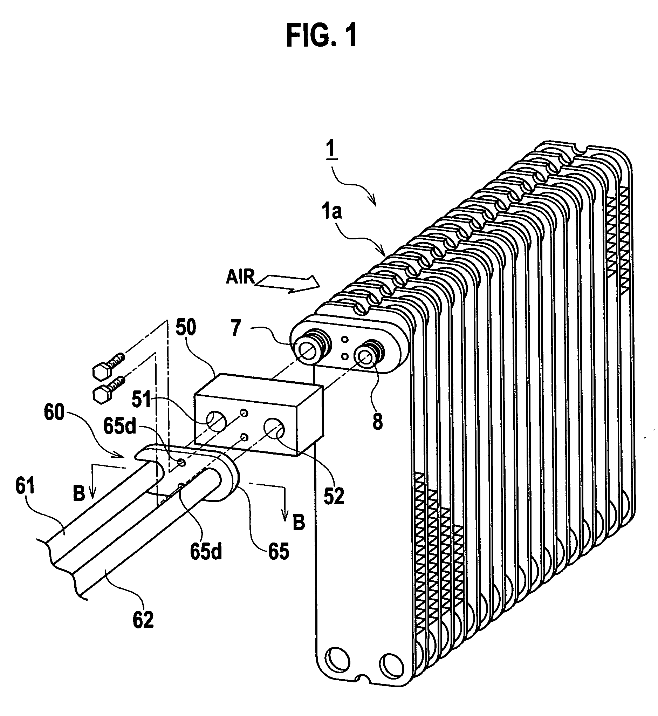

A pipe connector is disclosed in Japanese Patent Laid-Open No. H7-269987 (see Fig. 1). The pipe connector includes a first and second pipes each having a flange and a block-shaped base formed with through holes in which the first and second pipes are inserted and supported. The pipes are fixed to the base such that the pipe flanges are abut on one side of the base to place the pipes in position in an axial direction.

### DISCLOSURE OF THE INVENTION

According the pipe connector, both of the flange of the first pipe and the flange of the second pipe are abut on the one side of the base, so that the flanges are disposed side by side in the same level in the axial direction. In other words, the flanges are disposed on the same plane. Consequently, the diameters of the flanges limit the minimum distance between the pipes and this limits the miniaturization of the pipe connector.

The present invention provides a pipe connector, in which a plurality of pipes are inserted and fixed in a base, capable of reducing a distance between the plurality of pipes.

An aspect of the present invention is a pipe connector including pipes each having a flange at an end portion thereof, and a base formed with insertion portions in which the pipes are inserted and seating surfaces formed at a rim of the insertion portion and contacts on the flanges so as to axially fix the pipes, wherein the seating surfaces of the base are apart from each other by more than a thickness of the flanges in the axial position of the pipes such that the flanges are out of alignment with each other in the axial position.

### BRIEF DESCRIPTION OF THE DRAWINGS

[Fig. 1] Fig. 1 is an exploded perspective view of a structure for connecting a pipe connector and an expansion valve of a heat exchanger according to a first embodiment of the present invention.
[Fig. 2] Fig. 2 is an enlarged cross section taken along the B-B line in Fig. 1.
[Fig. 3] Fig. 3 is a front view of a base of the pipe connector.
[Fig. 4] Fig. 4 is a cross section taken along the C-C line in Fig. 3.
[Fig. 5] Fig. 5 is a cross sectional view showing a process for forming a flange of a refrigerant outlet pipe of the pipe connector, with steps (a), (b)and (c) in order.
[Fig. 6] Fig. 6 is a cross sectional view of a pipe connector according to a second embodiment of the present invention.
[Fig. 7] Fig. 7 is a cross sectional view of a pipe connector according to a third embodiment of the present invention.

### BEST MODE FOR CURRYING OUT THE INVENTION

Embodiments of the present invention will be explained in detail.

### (First Embodiment)

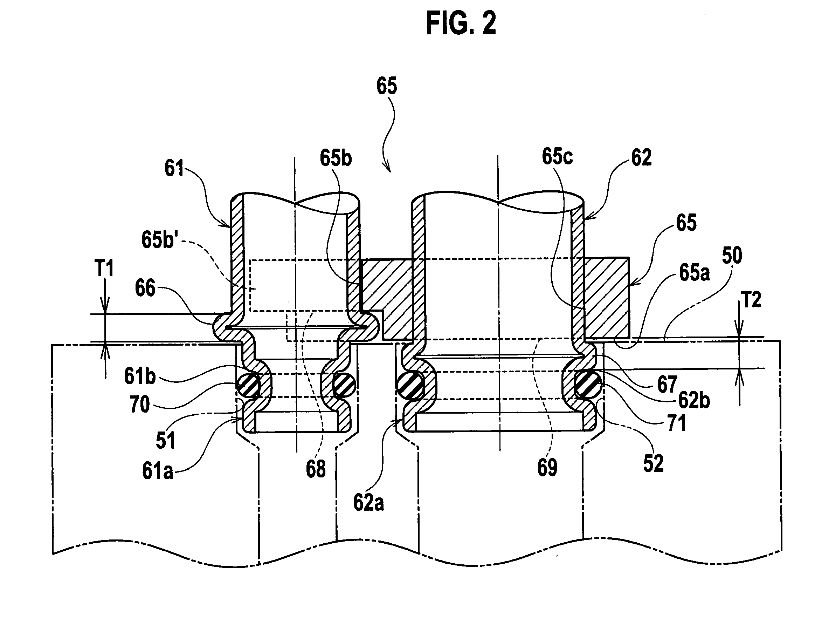

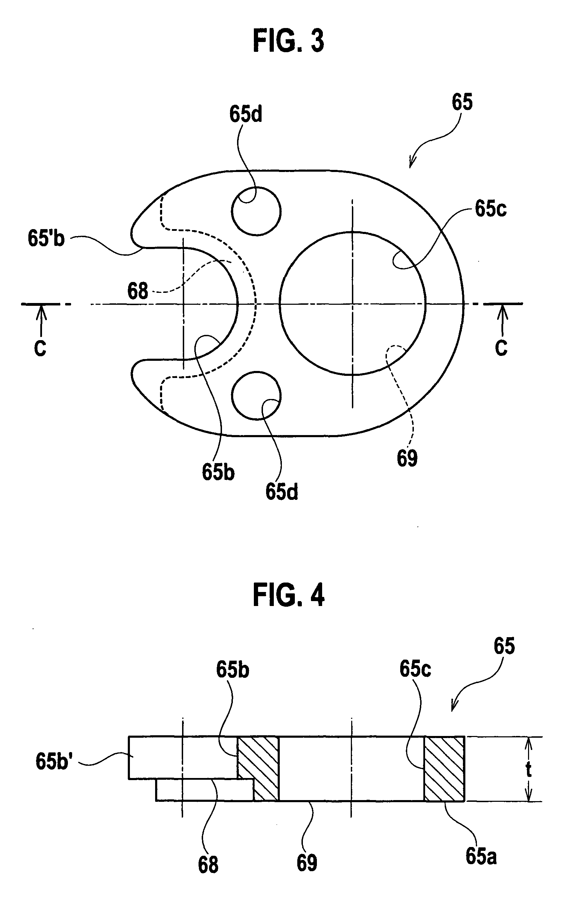

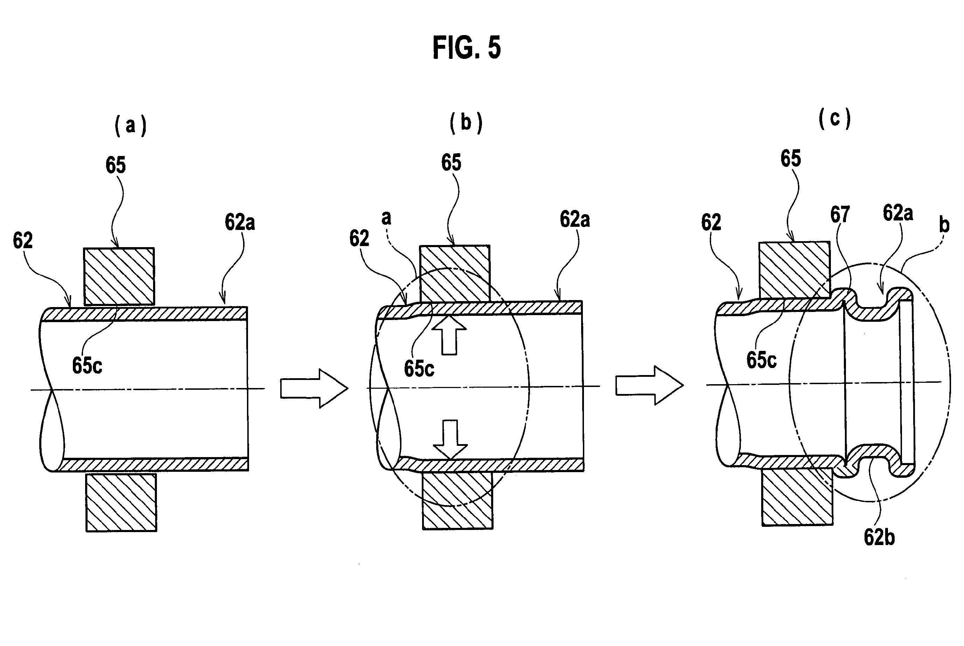

Figs. 1 to 5 show a first embodiment of the present invention. Fig. 1 is an exploded perspective view of a connection structure connecting a pipe connector and an expansion valve of a heat exchanger according to the first embodiment of the present invention. Fig. 2 is an enlarged cross section taken along the B-B line in Fig. 1. Fig. 3 is a front view of a base of the pipe connector. Fig. 4 is a cross section taken along the C-C line in Fig. 3. Fig. 5 is a cross sectional view showing forming process forming a flange of a refrigerant outlet pipe of the pipe connector, with steps of (a), (b) and (c) in order.

A pipe connector 60 of this embodiment is to be connected with the expansion valve 50 of an evaporator 1 as a heat exchanger in a refrigerating cycle which works as a counterpart pipe connector 50.

The pipe connector 60 includes a refrigerant inlet pipe 61 serving as a first pipe which is connected to a heat exchanger inlet 7 via the expansion valve 50, a refrigerant outlet pipe 62 serving as a second pipe which is connected to a heat exchanger outlet 8 via the expansion valve 50, and a base 65 supporting the refrigerant inlet pipe 61 and the refrigerant outlet pipe 62 inserted therein.

The pipes 61, 62 each have flanges 66, 67 near those end portions. The end portions of the pipes 61, 62 serve as pipe connecting parts 61a and 62a to be connected to the counterpart pipe connector. The pipe connecting parts 61 a, 62a are configured to be inserted in and connected to a first connecting port 51 and a second connecting port 52 which are formed in the counterpart pipe connector 50, respectively.

The base 65, as shown as Figs. 3 and 4, is formed in a substantially elliptical shape having a thickness t. An insertion portion 65b to which the refrigerant inlet pipe 61 is inserted is formed as a U-shaped opening. An insertion portion 65c to which the refrigerant outlet pipe 62 is inserted is formed as a circular hole. When the refrigerant inlet pipe 61 and the refrigerant outlet pipe 62 are connected to the base 65, the refrigerant outlet pipe 62 is inserted into the insertion portion 65c in the axial direction and the refrigerant inlet pipe 61 is put into the insertion portion 65b through an opening end 65b' of the U-shaped opening in the radial direction.

One side surface 65a of the base 65, which faces the counterpart pipe connector 50, has a first surface 68 and a second seating surface 69 at the periphery of the insertion portions 65b, 65c. The first seating surface 68 and the second seating surface 69 are abut on the flanges 66, 67 so as to axially fix the positions of the refrigerant inlet pipe 61 and the refrigerant outlet pipe 62 with respect to the base 65.

In this embodiment, the first and second seating surfaces 68, 69 are not aligned in the axial position by at least the thicknesses of the flanges 66, 67. With this configuration, axial positions of the flanges 66 and 67 are relatively shifted from each other.

More specifically, in this embodiment, the second surface 69 is flash with the one side surface 65a of the base 65 and the first seating surface 68 is depressed from the one side surface 65a of the base by the thickness T1 of the first flange 66 so as to have a gap with the one side surface 65a around the insertion portion 65b.

The pipe connecting part 61a of the refrigerant inlet pipe 61, which is one end of the refrigerant inlet pipe 61, is formed to have a diameter less than that of the first flange 66. The pipe connecting part 61a has an annular groove 61b at the middle thereof to hold an O-ring 70. The pipe connecting part 62a, which is the end portion of the refrigerant outlet pipe 62, is formed to have the substantially same diameter as that of the flange 67. The pipe connecting part 62a has an annular groove 62b at the middle thereof to hold an O-ring 71 that is provided adjacent to the flange 67.

When the end 62a of the refrigerant outlet pipe 62 is formed, firstly, as shown in Fig. 5(a), the end 62 of the inserted refrigerant outlet pipe 62 is projected from the insertion portion 65c of the base 65 to a predetermined extent; secondly, as shown in Fig. 5(b), the end 62 which is the projected portion of the refrigerant outlet pipe 62 extending from the insertion portion 65c is expanded in diameter to fit onto an inside of the insertion portion 65c (see the two-dot chain line circle a in the figure); and thirdly, as shown in Fig. 5(c), the flange 67 and the annular groove 62b are formed by rolling (see the two-dot chain line circle b in the figure).

Next, a connecting process for connecting the pipe connector 60 and the counterpart pipe connector 50 will be explained.

First, the ends 61 a, 62 of the pipes 61, 62 are inserted into the first and second connecting ports 51, 52 of the counterpart pipe connector 50, respectively. With this, the first flange 66 of the refrigerant inlet pipe 61 of the pipe connector 60 is abut on the periphery of the first connecting port 51 of the counterpart pipe connector 50, the flange 67 of the refrigerant outlet pipe 62 of the pipe connector 60 is received within the second connecting port 52 of the counterpart pipe connector 50, and the one side surface 65a of the base 65 is abut on the counterpart pipe connector 50.

Next, bolts (not shown) are inserted through an attachment hole 65d (see Fig. 4) formed in the base 65 and fastened to be fixed to the counterpart pipe connector 50. With this, the ends 61a, 62a of the refrigerant inlet pipe 61 and the refrigerant outlet pipe 62 are prevented from removing out of the first and second connecting ports 51, 52, such that connecting ports 51, 52 of the counterpart pipe connector 50 and the pipes 61, 62 of the pipe connector 60 are connected to and communicate with each other.

As described above, according to the pipe connector 60 of the present embodiment, the flanges 66, 67 of the inlet and outlet pipes 61, 62 are abut on the first and second seating surfaces 68, 69 of the base 65 so as to axially fix the flanges 66, 67; however, the first and second seating surfaces 68, 69 are axially away from each other by more than the thickness of the flanges 66, 67 so that the axial position of the flanges 66, 67 is out of alignment with each other. With this configuration, the flanges 66, 67 are not overlapped with each other. This allows the refrigerant inlet pipe 61 and the refrigerant outlet pipe 62 to be closer to each other.

### (Second Embodiment)

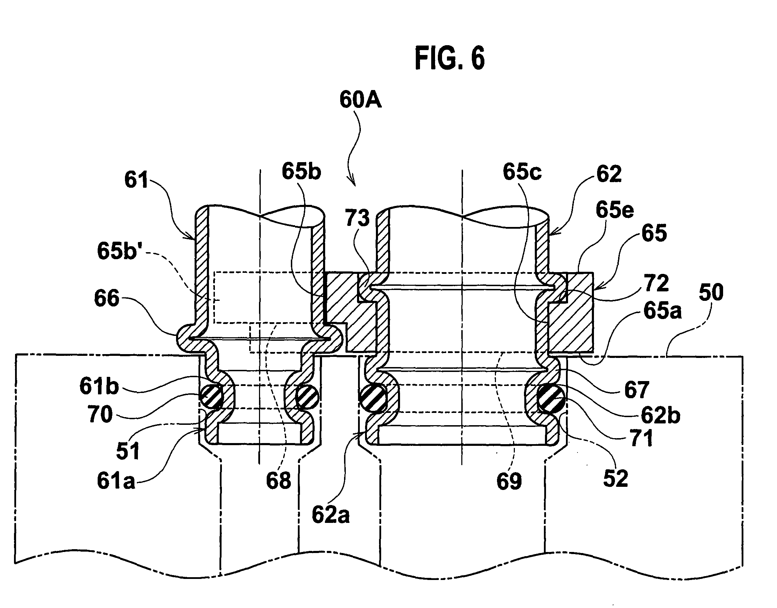

Fig. 6 shows a second embodiment of the present invention. In the second embodiment, the same reference numerals and symbols are used to designate the same elements as the elements described in the first embodiment, and redundant description thereof will be omitted. Fig. 6 is a cross sectional view of a pipe connector of the second embodiment.

Differences between the first embodiment and the second embodiment are that the second embodiment has a step portion 72 that is depressed from the other side surface 65e of the base 65 around the insertion portion 65c to which the refrigerant outlet pipe 62 is inserted and the second embodiment has a flange 73 formed at the refrigerant outlet pipe 62 which is provided at a position corresponding to the step portion 72.

Consequently, a pipe connector 60A of the second embodiment has similar effects to those of the pipe connector 60 of the first embodiment as well as an effect described below. In the second embodiment, since the refrigerant outlet pipe 62 is axially fixed in a manner that a pair of flanges 67, 73 formed on the refrigerant outlet pipe 62 sandwich the base 65 from both side surfaces 65a, 65e thereof, the refrigerant outlet pipe 62 is securely fixed to the base 65.

### (Third Embodiment)

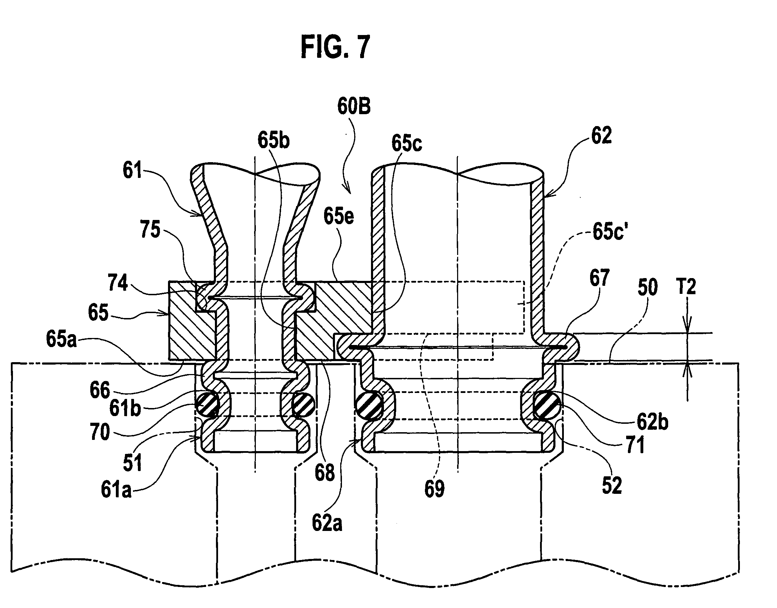

Fig. 7 shows a third embodiment of the present invention. In the third embodiment, the same reference numerals and symbols are used to designate the same elements as the elements described in the first embodiment, and redundant description thereof will be omitted. Fig. 7 is a cross sectional view of a pipe connector of the third embodiment.

Contrary to the first embodiment, in the third embodiment, the insertion portion 65b of the base 65 is formed in a circular hold and the insertion portion 65c in which the refrigerant outlet pipe 62 is inserted is formed in a U-shaped opening.

In addition, the first seating surface 68 for fixing the position of the flange 66 is flash with the one side surface 65a of the base 65 and the second seating surface 69 for fixing the position of the flange 67 is depressed from the one side surface 65a of the base by the thickness T2 of the flange 67 so as to have a gap with the one side surface 65a around the insertion portion 65b. Moreover, in the third embodiment, the other side surface 65e of the base 65 is formed with a recess 74 around the insertion portion 65b in which the refrigerant inlet pipe 61 is inserted, and the refrigerant inlet pipe 61 is formed with a radially outwardly projected flange 75 at a position corresponding to the recess 74 such that the flange 75 is abut on the recess 74.

According to a pipe connector 60B of the third embodiment, the insertion portion 65b in which the refrigerant inlet pipe 61 is inserted is formed as a circular hole and the insertion portion 65c in which the refrigerant outlet pipe 62 is inserted is formed as a U-shaped opening. Therefore, when the refrigerant inlet pipe 61 and the refrigerant outlet pipe 62 are connected to the base 65, the refrigerant inlet pipe 61 is axially inserted into the insertion portion 65b, and the refrigerant outlet pipe 62 is radially put into the insertion portion 65c to be fitted therein.

Moreover, according to the third embodiment, since two flanges 66, 75 formed on the refrigerant inlet pipe 61 are abut on both side surfaces 65a, 65e of the base 65, the refrigerant inlet pipe 61 is securely fixed to the base 65.

Although the present invention has been described above referring to the first to third embodiments, the present invention is not limited to those embodiments. Modifications and variations of the embodiments can be made without departing from the spirit or scope of the present invention. For example, the number of the pipes inserted in the base 65 can be more than three, even though the two pipes including the refrigerant inlet pipe 61 and the refrigerant outlet pipe 62 has been described in the above embodiments.

## Claims

1. A pipe connector comprising:
pipes each having a flange at an end portion thereof, and
a base formed with:
insertion portions in which the pipes are inserted, and
seating surfaces formed at a rim of the insertion portion and contacting on the flanges so as to axially fix the pipes, the seating surfaces of the base arranged apart from each other by more than a thickness of the flanges in the axial position of the pipes such that the flanges are out of alignment with each other in the axial position.
